# EUROPÄISCHE PATENTANMELDUNG

(11) **EP 4 130 926 A1**
(43) Veröffentlichungstag der Anmeldung: **08.02.2023**
(21) Anmeldenummer: 22183081.3
(22) Anmeldetag: 05.07.2022
(51) Int. Cl.: G05G 1/02, G05G 1/08, B60K 37/06, H01H 25/06

(54) **DREHSTELLER**

(30) Priorität: 03.08.2021 DE 102021120085
(71) Anmelder: Marquardt GmbH, 78604 Rietheim-Weilheim (DE)
(72) Erfinder: HAKE, Felix, 78048 Villingen-Schwenningen (DE); LEIBER, Tobias, 78052 VS-Obereschach (DE); GUTEKUNST, Roy, 72172 Sulz-Mühlheim (DE); HAUSMANN, Alexander, 78073 Bad Dürrheim (DE)
(74) Vertreter: Staeger & Sperling Partnerschaftsgesellschaft mbB

(57) **Zusammenfassung**

Die Erfindung betrifft einen Drehsteller (1) mit einem eine Mittelachse (X) aufweisenden formstabilen Mittenelement (10), einem in Umfangsrichtung (U) relativ zu dem Mittenelement (10) um die Mittelachse (X) bewegbaren und endlosen Bedienelement (20) und zumindest einem Sensor (30, 31) zur Erfassung einer Bewegung des Bedienelements (20) gegenüber dem Mittenelement (10), wobei das Bedienelement (20) das Mittenelement (10) einer Außenkontur des Mittenelements (10) folgend in die Umfangsrichtung (U) vollständig umläuft, und wobei das endlose Bedienelement (20) zumindest in eine zu der Mittelachse (X) orthogonalen Richtung (Y) verformbar und ausgebildet ist, seine Innenkontur der Außenkontur des Mittenelements (10) anzupassen.

## Beschreibung

Die Erfindung betrifft einen Drehsteller mit einem eine Mittelachse aufweisenden formstabilen Mittenelement und einem in Umfangsrichtung relativ zu dem Mittenelement um die Mittelachse bewegbaren und endlosen Bedienelement, welches verformbar und ausgebildet ist, seine Innenkontur einer Außenkontur des Mittenelements anzupassen.

Aus dem Stand der Technik ist eine Vielzahl von verschiedenen Drehstellern bekannt, welche meist als Bedienelemente beispielsweise in Kraftfahrzeugen eingesetzt werden.

Solche Drehsteller basieren meist darauf, dass ein starrer Ring oder ein anderes starres Element um eine Mittelachse beispielsweise eines Mittenelements drehbar, entlang der Mittelachse betätigbar und der gesamte Drehsteller mit dem Mittenelement orthogonal zu der Mittelachse verschiebbar bzw. betätigbar ist.

Solche Drehsteller sind beispielsweise aus den Schriften EP 3 574 393 B1, DE 10 2019 220 005 A1 und WO 2020/249247 A1 bekannt.

Unabhängig von der vorgesehenen Ausführungsform ist die Außenkontur des Mittenelements jedoch meist auf eine runde Form und die Innenkontur des starren Bedienelements auf eine dazu korrespondierende Formgebung beschränkt und selbst starr, was den Gestaltungsfreiraum stark einengt.

Darüber hinaus sind die verschiedenen im Stand der Technik bekannten Aufbauten oftmals vergleichsweise komplex und mithin teuer, da für jede Betätigungsart meist eine eigene Kinematik vorgesehen ist.

Der Erfindung liegt deshalb die Aufgabe zugrunde, die vorgenannten Nachteile zu überwinden und einen Drehsteller bereitzustellen, welcher einen hohen Designfreiheitsgrad aufweist und zugleich einfach und kostengünstig herstellbar ist.

Diese Aufgabe wird durch die Merkmalskombination gemäß Patentanspruch 1 gelöst.

Erfindungsgemäß wird daher ein Drehsteller mit einem eine Mittelachse aufweisenden formstabilen Mittenelement, einem in Umfangsrichtung relativ zu dem Mittenelement um die Mittelachse bewegbaren und endlosen Bedienelement und zumindest einem Sensor zur Erfassung einer Bewegung des Bedienelements gegenüber dem Mittenelement vorgeschlagen. Das Bedienelement umläuft das Mittenelement einer Außenkontur des Mittenelements folgend in Umfangsrichtung vollständig. Das endlose Bedienelement ist zumindest in eine zu der Mittelachse orthogonalen Richtung verformbar und ausgebildet, seine Innenkontur insbesondere bei einer Bewegung des Bedienelements in Umfangsrichtung um die Mittelachse der Außenkontur des Mittenelements anzupassen.

Bezüglich des Mittenelements wird als formstabil verstanden, dass sich das Mittenelement bei einer bestimmungsgemäßen Verwendung nicht wesentlich durch äußere Kräfte verformt, sondern zumindest im Bereich seiner Außenkontur seine Form beibehält. Als endlos wird ferner verstanden, dass das Bedienelement in Umfangsrichtung um die Mittelachse kein Ende hat, da das Bedienelement beispielsweise als in Umfangsrichtung geschlossener Riemen, umfangsgeschlossenes Band oder in Umfangsrichtung geschlossene Kette ausgebildet ist oder ein Anfang des Bedienelements mit einem Ende des Bedienelements verbunden und dadurch endlos ist.

Durch eine solche Ausführung muss der Drehsteller bzw. das Mittenelement nicht mehr vollständig kinematisch bewegt werden, da es für die Bedienung ausreichend ist, ausschließlich das Bedienelement gegenüber dem Mittenelement zu bewegen.

Vorzugsweise ist dabei vorgesehen, dass das Bedienelement aus einer Vielzahl von miteinander verbundenen Gliedern, beispielsweise einer Kette, und/oder aus einem elastischen Material gebildet ist. Ein aus einem elastischen Material gebildetes Bedienelement kann insbesondere als Mantel, Band oder Riemen ausgebildet sein. Alternativ kann das Bedienelement jedoch auch aus einer eindimensional beweglichen Kette gebildet sein, welche auch als Gelenkkette bezeichenbar ist. Grundsätzlich sind jedoch auch Mischformen möglich, bei welchen beispielsweise starre Elemente als Glieder durch ein elastisches Material miteinander verbunden sind.

Da das Bedienelement zumindest eindimensional und wie beschrieben in einer Richtung orthogonal zu der Mittelachse verformbar ist, kann sich das Bedienelement durch seine Verformbarkeit bei einer Bewegung in Umfangsrichtung um die Mittelachse der Außenkontur des Mittenelements anpassen.

Entsprechend kann vorgesehen sein, dass eine die Außenkontur des Mittenelements bestimmende Außenfläche des Mittenelements zumindest eine zu der Mittelachse parallel verlaufene und vorzugsweise in Radialrichtung von der Mittelachse wegweisende Kante aufweist, über welche hinweg verlaufend das Bedienelement angeordnet ist. Die Kante kann dabei abgerundet sein, sodass gerade verlaufende Teilbereiche der Außenkontur fließend ineinander übergehen.

Weiter kann das Mittenelement an seiner Außenkontur bewegliche Umlenkelemente zur Reduzierung einer Reibung zwischen Bedienelement und Außenkontur des Mittelelements aufweisen, über welche hinweg verlaufend das Bedienelement angeordnet ist. Solche Umlenkelemente können beispielsweise als Rollen ausgebildet sein, über welche das Bedienelement geführt ist, wobei die Rollen oder generell die Umlenkelemente auch mit dem Bedienelement parallel der Mittelachse verschiebbar sein können.

Das Bedienelement kann rotatorisch um die Mittelachse und/oder translatorisch entlang der Mittelachse an dem Mittenelement und relativ zu dem Mittenelement bewegbar sein. Bezüglich einer translatorischen Bewegung können auch Rückstellelemente, wie Federn, vorgesehen sein, welche auch beispielsweise über die Umlenkelemente rückstellend auf das Bedienelement wirken können, um das Bedienelement nach einer translatorischen Verschiebung in eine Ausgangsstellung zurück zu bewegen.

Um die Bewegung des Bedienelements erfassen zu können, sieht eine Variante des Drehstellers vor, dass das Bedienelement zumindest abschnittsweise magnetisch ist und/oder magnetische Elemente aufweist und/oder magnetische Elemente zu einer Bewegung antreibt. Beispielsweise können an zumindest einer Umlenkrolle magnetische Elemente angeordnet sein, welche mit der Umlenkrolle durch das Bedienelement rotiert und/oder translatorisch verschoben werden können. Weiter ist der zumindest eine Sensor ausgebildet, eine Änderung eines magnetischen Feldes zu erfassen und aus der Änderung des magnetischen Feldes eine Bewegung des Bedienelements um die Mittelachse und/oder entlang der Mittelachse zu bestimmen. Dabei können auch mehrere Sensoren vorgesehen sein, welche unterschiedliche Bewegungen detektieren. Beispielsweise kann ein erster Sensor eine rotatorische Bewegung des Bedienelements um die Mittelachse und ein zweiter Sensor eine translatorische Bewegung um die Mittelachse detektieren.

Zusätzlich oder alternativ kann das Bedienelement zumindest abschnittsweise Signalgeber aufweisen. Beispielsweise kann die zu der Außenkontur des Mittenelements weisende Innenfläche des Bedienelements die Mittelachse umlaufend solche insbesondere in regel- und/oder gleichmäßigen Abständen vorgesehenen Elemente aufweisen, bei welchen es sich beispielsweise um zahn- oder schwellenartige zu der Mittelachse weisende Vorsprünge handeln kann. Weist das Bedienelement solche Signalgeber auf, ist der Sensor durch die Signalgeber betätigbar und ausgebildet, aus einer Betätigung durch die Signalgeber eine Bewegung des Bedienelements um die Mittelachse und/oder entlang der Mittelachse zu bestimmen. Auch hier können mehrere Sensoren vorgesehen sein, wobei ein Sensor beispielsweise sowohl eine rotatorische Bewegung der Signalgeber um die Mittelachse als auch eine translatorische Verschiebung der Signalgeber entlang der Mittelachse erfassen kann. Alternativ kann auch beispielsweise ein erster Sensor zur Erfassung der rotatorischen Bewegung und ein zweiter Sensor zur Erfassung der translatorischen Bewegung vorgesehen sein.

Grundsätzlich können auch Signalgeber sowie durch die Signalgeber betätigbare Sensoren mit magnetischen Elementen bzw. einem magnetischen Bedienelement und Sensoren zur Erfassung einer Änderung des magnetischen Feldes kombiniert werden.

Weiter können die Sensoren oder auch zusätzliche Sensoren vorgesehen und ausgebildet sein, eine orthogonal zu der Mittelachse auf das Bedienelement wirkende Druckkraft zu erfassen. Zusätzlich oder alternativ kann der Drehsteller Drucksensoren aufweisen, welche ausgebildet sind, eine orthogonal zu der Mittelachse auf das Bedienelement wirkende Druckkraft zu erfassen. Solche Drucksensoren sind vorzugsweise in oder an dem Mittenelement angeordnet.

Das Mittenelement kann zudem zumindest ein Führungselement zur Begrenzung einer Bewegung des Bedienelements entlang der Mittelache aufweisen.

Um ein haptisches Feedback zu ermöglichen, kann der Drehsteller ferner einen Aktor zur Beaufschlagung des Bedienelements mit einem Drehmoment aufweisen. Ein solcher Aktor kann beispielsweise über die Umlenkelemente ein Drehmoment auf das Bedienelement aufbringen, welches der Bewegung des Bedienelements entgegenwirkt. Ferner kann auch beispielsweise ein zumindest auf das Bedienelement wirkender Aktor vorgesehen sein, durch welchen zumindest an dem Bedienelement eine für einen Bediener spürbare Vibration erzeugbar ist.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine erste Variante im Teilschnitt in einer Seitenansicht;
- Fig. 2: die erste Variante im Teilschnitt in einer Aufsicht;
- Fig. 3: eine zweite Variante im Teilschnitt in einer Seitenansicht;
- Fig. 4: die zweite Variante im Teilschnitt in einer Aufsicht.

Die Figuren sind beispielhaft schematisch. Gleiche Bezugszeichen in den Figuren weisen auf gleiche funktionale und/oder strukturelle Merkmale hin.

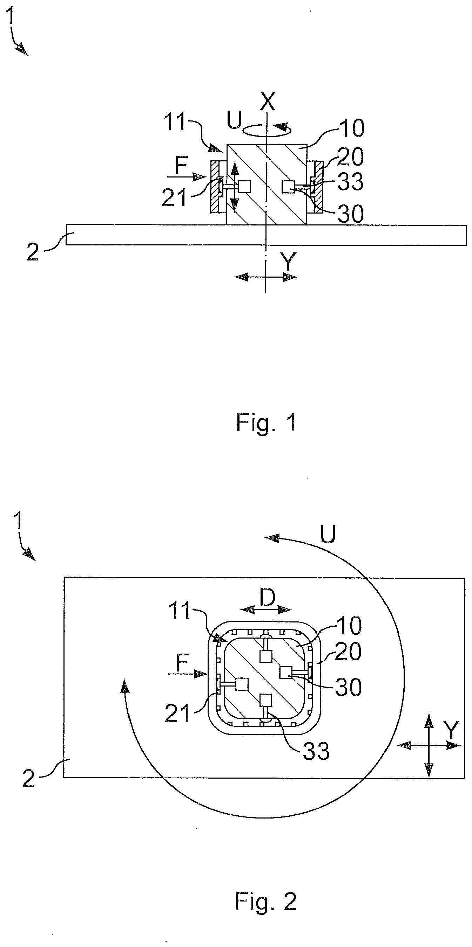

In den Figuren 1 bis 4 ist jeweils ein auf einer Abdeckung 2 angeordneter Drehsteller 1 dargestellt, wobei in die Abdeckung 2 und/oder das Mittenelement 10 des Drehstellers 1 auch eine Anzeige bzw. ein Display integriert sein kann.

Grundsätzlich weist ein Drehsteller 1, wie er in den Figuren 1 bis 4 dargestellt ist, ein formstabiles Mittenelement 10, ein in Umfangsrichtung U relativ zu dem Mittenelement 10 um eine Mittelachse X des Mittenelements 10 bewegbares und endloses Bedienelement 20 sowie zumindest einen Sensor 30 zur Erfassung einer Bewegung des Bedienelements 20 gegenüber dem Mittenelement 10. Dabei umläuft das Bedienelement 20 das Mittenelement 10 einer Außenkontur des Mittenelements 10 folgend in die Umfangsrichtung U vollständig, wobei das endlose Bedienelement 20 zumindest in eine zu der Mittelachse X orthogonalen Richtung Y verformbar und ausgebildet ist, seine Innenkontur der Außenkontur des Mittenelements 10 anzupassen.

Weiter weist das Mittenelement gemäß den vorliegend dargestellten Varianten der Figuren 1 bis 4 eine rechteckige bzw. quadratische Grundform auf, deren Kanten 11 abgerundet sind. Alternativ können jedoch auch andere Grundformen, wie beispielsweise eine runde oder dreieckige Grundform vorgesehen sein.

Bei der Variante, wie sie in den Figuren 1 und 2 dargestellt ist, sind an dem Mittenelement 10 zu jeder Seite hin je ein Sensor 30 vorgesehen, welche einen Druckaufnehmer oder Stößel 33 aufweisen, welcher mit Signalgebern 21 an dem umlaufenden Bedienelement 20 interagieren bzw. von diesen betätigbar sind.

Wird das Bedienelement 20, welches vorliegend gemäß einem in Umfangsrichtung U um das Mittenelement 10 verlaufenden Zahnriemen mit Zähnen als Signalgebern 21 ausgebildet ist, gemäß der Bewegung D in Umfangsrichtung U bewegt, wirken die Signalgeber 21 auf die Sensoren 30, sodass die Bewegung D von diesen erfasst werden kann. Durch einen Versatz der Sensoren 30, kann zudem eine feinere Auflösung erreicht werden. Hierzu können die Sensoren 30, wie in Figur 2 dargestellt, derart ausgerichtet sein, dass die Sensoren 30 bei einer Bewegung D des Bedienelements 20 abwechselnd von den Signalgebern 21 betätigt werden.

Weiter ist vorliegend vorgesehen, dass die Sensoren 30 verschiedene Druckoder Betätigungsstufen haben, wodurch eine auf Sie zusätzlich wirkende Kraft F erfassbar ist. Dadurch kann eine Eingabe eines Benutzers durch eine Druckkraft F auf das Bedienelement erkannt werden.

Neben der rotatorischen Bedienbarkeit des Bedienelements 20 und der Erkennung einer Druckkraft F, ist bei der Ausführungsform gemäß den Figuren 1 und 2 zudem eine translatorische Eingabe durch eine translatorische Verschiebbarkeit des Bedienelements 20 parallel zu der Mittelachse X vorgesehen. Vorliegend können die Stößel 33 bzw. die Druckaufnehmer der Sensoren 30 zugleich verkippbar sein und beispielsweise durch eine Verkippung und eine damit verbundene Hebelbewegung eine Bewegung des Bedienelements 20 parallel der Mittelachse X detektieren. Durch eine Federbeaufschlagung der Stößel 33 kann zugleich eine Rückstellkraft erzeugt werden, wodurch das Bedienelement 20 federbetätigt in eine Grundstellung zurück bewegbar ist.

Weiter können die Sensoren 30 bzw. deren Stößel 33 oder Druckaufnehmer integral von einem nicht näher dargestellten Aktor betätigbar sein, durch welchen eine Vibration und mithin eine haptische Rückmeldung auf das Bedienelement 20 aufbringbar ist.

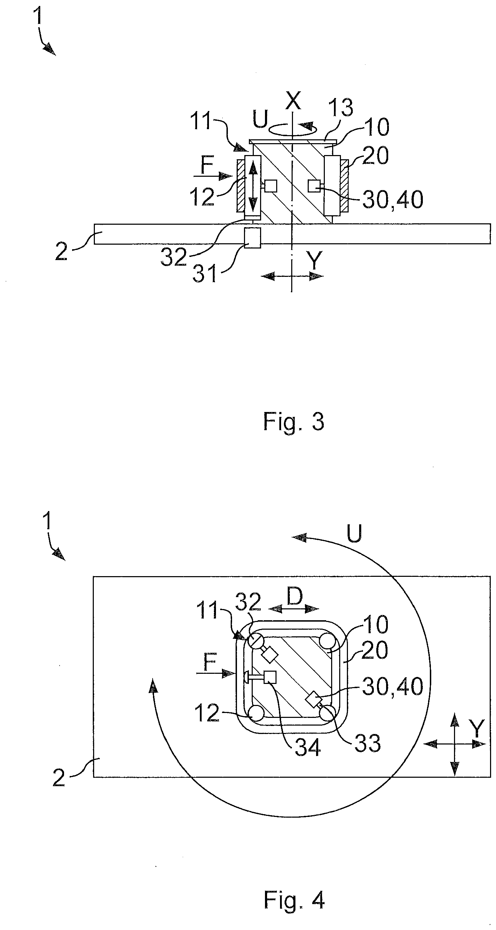

Gemäß der von den Figuren 3 und 4 dargestellten Variante sind an den Kanten 11 des Mittenelements 10 als Rollen ausgebildete Umlenkelemente 12 vorgesehen, über welche hinweg das Bedienelement 20 verläuft, welches hier keine Signalgeber 21 aufweist. Zur Erkennung einer Bewegung D des Bedienelements 20 in Umfangsrichtung U um das Mittenelement 10 kann beispielsweise eine Rotation der Umlenkelemente 12 erfasst werden. Hierfür können diese auch beispielsweise einen Magneten bzw. ein magnetisches Element 32 aufweisen, sodass die Rotation berührungslos von dem Sensor 30 oder auch einem weiteren, als Hall-Sensor ausgebildeten Sensor 31 erfasst werden kann. Die Rollen bzw. die Umlenkelemente 12 sind vorliegend zusammen mit dem Bedienelement 20 translatorisch parallel zu der Mittelachse X verschiebbar, wobei eine Verschiebung ebenfalls durch den Sensor 31 erfassbar ist. Beispielhaft ist ferner ein Führungselement 13 dargestellt, welches als Anschlag dient, sodass die translatorische Bewegung begrenzt ist.

Eine quer zu der Mittelachse X wirkende Kraft F, welche durch den Bediener aufgebracht werden kann, kann vorliegend durch einen Drucksensor 34 erfasst werden, wobei auch an den Umlenkrollen bzw. den Umlenkelementen 12 Sensoren 30 vorgesehen sein können, welche nicht nur eine Rotation der Umlenkelemente 12 und mithin eine Bewegung D des Bedienelements 20, sondern auch eine auf sie über das Bedienelement 20 wirkende Druckkraft F detektieren können.

Wie gemäß der zuvor beschriebenen Ausführungsform können die Stößel 33 der Sensoren 30, 34 auch beispielsweise über einen Aktor 40 eine Vibration und mithin ein haptisches Feedback auf das Bedienelement 20 übertragend ansteuerbar sein.

## Patentansprüche

1. Drehsteller (1) mit einem eine Mittelachse (X) aufweisenden formstabilen Mittenelement (10), einem in Umfangsrichtung (U) relativ zu dem Mittenelement (10) um die Mittelachse (X) bewegbaren und endlosen Bedienelement (20) und zumindest einem Sensor (30, 31) zur Erfassung einer Bewegung des Bedienelements (20) gegenüber dem Mittenelement (10),
wobei das Bedienelement (20) das Mittenelement (10) einer Außenkontur des Mittenelements (10) folgend in die Umfangsrichtung (U) vollständig umläuft,
und wobei das endlose Bedienelement (20) zumindest in eine zu der Mittelachse (X) orthogonalen Richtung (Y) verformbar und ausgebildet ist, seine Innenkontur der Außenkontur des Mittenelements (10) anzupassen.

2. Drehsteller nach Anspruch 1,
wobei das Bedienelement (20) aus einer Vielzahl von miteinander verbundenen Gliedern und/oder aus einem elastischen Material gebildet ist.

3. Drehsteller nach Anspruch 1 oder 2,
wobei eine die Außenkontur des Mittenelements (10) bestimmende Außenfläche des Mittenelements (10) zumindest eine zu der Mittelachse (X) parallel verlaufene Kante (11) aufweist, über welche hinweg verlaufend das Bedienelement (20) angeordnet ist.

4. Drehsteller nach einem der vorhergehenden Ansprüche,
wobei das Mittenelement (10) an seiner Außenkontur bewegliche Umlenkelemente (12) zur Reduzierung einer Reibung zwischen Bedienelement (20) und Außenkontur des Mittelelements (10) aufweist, über welche hinweg verlaufend das Bedienelement (20) angeordnet ist.

5. Drehsteller nach einem der vorhergehenden Ansprüche,
wobei das Bedienelement (20) rotatorisch um die Mittelachse (X) und/oder translatorisch entlang der Mittelachse (X) an dem Mittenelement (10) und relativ zu dem Mittenelement (10) bewegbar ist.

6. Drehsteller nach einem der vorhergehenden Ansprüche,
wobei das Bedienelement (20) zumindest abschnittsweise magnetisch ist und/oder magnetische Elemente aufweist und/oder magnetische Elemente (32) zu einer Bewegung antreibt,
und wobei der Sensor (30, 31) ausgebildet ist, eine Änderung eines magnetischen Feldes zu erfassen und aus der Änderung des magnetischen Feldes eine Bewegung des Bedienelements (20) um die Mittelachse (X) und/oder entlang der Mittelachse (X) zu bestimmen.

7. Drehsteller nach einem der vorhergehenden Ansprüchen,
wobei das Bedienelement (20) zumindest abschnittsweise Signalgeber (21) aufweist
und wobei der Sensor (30, 31) durch die Signalgeber (21) betätigbar und ausgebildet ist, aus einer Betätigung durch die Signalgeber (21) eine Bewegung des Bedienelements (20) um die Mittelachse (X) und/oder entlang der Mittelachse (X) zu bestimmen.

8. Drehsteller nach einem der vorhergehenden Ansprüchen,
wobei die Sensoren (30, 31) ferner ausgebildet sind, eine orthogonal zu der Mittelachse (X) auf das Bedienelement (20) wirkende Druckkraft (F) zu erfassen,
und/oder wobei der Drehsteller (1) Drucksensoren aufweist, welche ausgebildet sind, die orthogonal zu der Mittelachse (X) auf das Bedienelement (20) wirkende Druckkraft (F) zu erfassen.

9. Drehsteller nach einem der vorhergehenden Ansprüche,
wobei das Mittenelement (10) zumindest ein Führungselement (13) zur Begrenzung einer Bewegung des Bedienelements (20) entlang der Mittelache (X) aufweist.

10. Drehsteller nach einem der vorhergehenden Ansprüche,
ferner aufweisend einen Aktor (40) zur Beaufschlagung des Bedienelements (20) mit einem Drehmoment.
